# EUROPÄISCHE PATENTANMELDUNG

(11) **EP 4 653 263 A1**
(43) Veröffentlichungstag der Anmeldung: **26.11.2025**
(21) Anmeldenummer: 24177950.3
(22) Anmeldetag: 24.05.2024
(51) Int. Cl.: B60R 9/06, B60R 9/08, B60R 9/10

(54) **TRÄGERVORRICHTUNG ZUM BEFESTIGEN EINER LADUNG AN EINEM FAHRZEUG**

(71) Anmelder: Melder, Dieter, 86842 Türkheim (DE); Fäßler, Norbert, 88430 Rot an der Rot (DE); Tafa, Revi, 86842 Türkheim (DE)
(72) Erfinder: Melder, Dieter, 86842 Türkheim (DE); Fäßler, Norbert, 88430 Rot an der Rot (DE); Tafa, Revi, 86842 Türkheim (DE)
(74) Vertreter: Knöner, Gregor

(57) **Zusammenfassung**

Es wird eine Trägervorrichtung (2) zum Befestigen einer Ladung an einem Fahrzeug bereitgestellt. Die Trägervorrichtung (2) weist auf: eine Befestigungsanordnung (6), die ausgestaltet ist, um die Trägervorrichtung (2) an dem Fahrzeug zu befestigen; eine Trägeranordnung (8) mit einem Träger (10) für die Ladung und einer Schwenkvorrichtung (20), die ausgestaltet ist, um den Träger (10) gegenüber der Befestigungsanordnung (6) zu verschwenken; und eine Verriegelungseinrichtung (24) mit Entlastungsvorrichtung, die derart ausgestaltet ist, dass durch Verriegelung der Verriegelungseinrichtung (24) eine Kraft zwischen der Befestigungsanordnung (6) und der Trägeranordnung (8) wirkt, die eine Last auf zumindest einen Teil der Schwenkvorrichtung (20) reduziert.

## Beschreibung

### Gebiet der Erfindung

Die vorliegende Erfindung betrifft eine Trägervorrichtung zum Befestigen einer Ladung an einem Fahrzeug, sowie ein Fahrzeug mit einer solchen Trägervorrichtung.

### Hintergrund der Erfindung

Es sind Trägervorrichtungen bekannt, die zum Transport von Ladungen, wie beispielsweise Zweirädern, an Fahrzeugen vorgesehen sind. Dabei wird die Trägervorrichtung an dem Fahrzeug befestigt. Üblicherweise wird solch eine Vorrichtung am Heck eines Pkws oder eines Buses angebracht, wobei an dem Heck solcher Fahrzeuge gewöhnlich eine Hecktür beispielsweise in Form einer Kofferraumklappe bereitgestellt ist. Die Trägervorrichtung kann verschwenkt werden, so dass die Hecktür des Fahrzeugs zugänglich ist. Eine solche Trägervorrichtung ist unter anderem bekannt aus dem Patent EP3725593B1.

Daher ist es wünschenswert eine Trägervorrichtung bereitzustellen, die sich durch eine verbesserte Betriebssicherheit und eine einfache Bediendung auszeichnet. Weiterhin ist es wünschenswert, den Verschleiß der Trägervorrichtung zu reduzieren und damit die Lebensdauer der Trägervorrichtung zu erhöhen.

### Zusammenfassung der Erfindung

Dementsprechend ist eine Aufgabe der vorliegenden Erfindung, die vorab genannten Nachteile zumindest teilweise zu vermeiden oder zu verringern. Insbesondere ist es eine Aufgabe der vorliegenden Erfindung, eine Trägervorrichtung mit verbesserter Betriebssicherheit und erhöhter Lebensdauer bereitzustellen.

Diese Aufgabe wird mit Hilfe der Merkmale der unabhängigen Ansprüche gelöst. In den abhängigen Ansprüchen sind bevorzugte Ausführungsformen der Erfindung beschrieben.

Erfindungsgemäß wird eine Trägervorrichtung zum Befestigen einer Ladung an einem Fahrzeug bereitgestellt. Die Trägervorrichtung weist auf: ein Befestigungsanordnung, die ausgestaltet ist, um die Trägervorrichtung an dem Fahrzeug zu befestigen; eine Trägeranordnung mit einem Träger für die Ladung und einer Schwenkvorrichtung, die ausgestaltet ist, um den Träger gegenüber der Befestigungsanordnung zu verschwenken; und eine Verriegelungseinrichtung mit Entlastungsvorrichtung (insbesondere einer Spannvorrichtung), die derart ausgestaltet ist, dass bei Verriegelung der Verriegelungseinrichtung eine Kraft zwischen der Befestigungsanordnung und der Trägeranordnung wirkt, die eine Last auf zumindest einen Teil der Schwenkvorrichtung reduziert.

Vorzugsweise ist die Verriegelungseinrichtung derart ausgestaltet, dass bei Verriegelung der Verriegelungseinrichtung die Befestigungsanordnung und die Trägeranordnung derart gegeneinander verspannt sind, dass eine Kraft zwischen der Befestigungsanordnung und der Trägeranordnung wirkt, die eine Last auf zumindest einen Teil der Schwenkvorrichtung reduziert.

Vorzugsweise wird die Trägeranordnung bei Verriegelung der Verriegelungseinrichtung durch die Kraft gegen die Befestigungsanordnung gezogen und/oder die Verriegelungseinrichtung wird kraftbeaufschlagt.

Durch die Reduzierung der Last auf zumindest einen Teil der Schwenkvorrichtung ergibt sich ein geringerer Verschleiß der Trägervorrichtung und insbesondere der Schwenkvorrichtung. Somit wird ein vorzeitiger Verschleiß an der Schwenkvorrichtung verhindert und dadurch die Lebensdauer der Trägervorrichtung erhöht. Dadurch können eine dauerhafte Betriebssicherheit beim Transport einer Ladung mit der Trägervorrichtung und eine einfache Bedienung gewährleistet werden.

Vorzugsweise weist die Schwenkvorrichtung zumindest einen Schwenkarm auf, der den Träger schwenkbar mit der Befestigungsanordnung und insbesondere einem Befestigungselement der Befestigungsanordnung verbindet. Vorzugsweise reduziert die Verriegelungseinrichtung bei Verriegelung ein Moment und/oder eine Kraft auf zumindest ein Schwenkmittel, mit dem der zumindest eine Schwenkarm der Schwenkvorrichtung an dem Träger oder der Befestigungsanordnung schwenkbar angelenkt ist. Somit wird der Verschleiß der Schwenkvorrichtung und insbesondere der Schwenkmittel reduziert und eine erhöhte Lebensdauer erreicht. Vorzugsweise umfasst das Schwenkmittel ein Lager, das den Schwenkarm schwenkbar an der Befestigungsanordnung befestigt.

Die Verriegelung der Verriegelungseinrichtung und die dabei wirkende Kraft zwischen der Befestigungsanordnung und der Trägeranordnung ist beispielsweise von Vorteil, wenn das Fahrzeug bewegt wird und entsprechend hohe Kräfte auf die Trägervorrichtung und insbesondere auf die Schwenkvorrichtung einwirken. Beispielsweise können solche Kräfte beim Bremsen oder Beschleunigen des Fahrzeugs auftreten oder durch äußere Krafteinflüsse wie durch Bodenunebenheiten hervorgerufen werden.

Dass eine Kraft zwischen der Befestigungsanordnung und der Trägeranordnung wirkt, umfasst vorzugsweise auch, dass ein Moment zwischen der Befestigungsanordnung und der Trägeranordnung wirkt, wobei ein Moment eine Kraft an einem Angriffspunkt beabstandet von einem Drehpunkt ist.

Die Ladung kann ein beliebiges Objekt sein, das mittels der Trägervorrichtung transportiert werden soll. Die Ladung kann zumindest ein Zweirad sein, beispielsweise ein Fahrrad, E-Bike, ein Motorrad, ein Roller, ein Mofa und/oder Moped. Beispielsweise kann die Ladung auch eine Kiste, ein Stand-Up Paddle Board, ein Boot oder sonstiges umfassen.

Vorzugsweise kann der Träger auch mit der Ladung bzw. unter Einwirkung einer Last oder Kraft verschwenkt werden. Insbesondere kann der Träger in einer horizontalen Ebene durch das Verschwenken horizontal verschoben werden.

Bevorzugt weist die Befestigungsanordnung einen ersten Teil der Verriegelungseinrichtung und die Trägeranordnung einen zweiten Teil der Verriegelungseinrichtung auf, wobei bei Verriegelung der Verrieglungseinrichtung der erste und zweite Teil der Verriegelungseinrichtung derart zusammenwirken oder ineinandergreifen, dass die oben genannte Kraft zwischen der Befestigungsanordnung und der Trägeranordnung wirkt. Vorzugsweise ist der erste Teil der Verriegelungseinrichtung in einer Öffnung oder einer Aussparung der Befestigungsanordnung, insbesondere eines Befestigungselements, beispielsweise als Hohlprofil ausgestaltet, der Befestigungsanordnung angeordnet.

Vorzugsweise ist der Träger mittels der Schwenkvorrichtung um zumindest eine vertikale Achse gegenüber der Befestigungsanordnung schwenkbar (insbesondere in einem montierten Zustand der Trägervorrichtung am Fahrzeug). Bevorzugt ist der Träger gegenüber der Befestigungsanordnung verschwenkbar, so dass in einer ersten Schwenkstellung des Trägers der Träger im Wesentlichen parallel zum Befestigungsanordnung orientiert ist und in einer zweiten Schwenkstellung der Träger winklig zur Befestigungsanordnung orientiert ist. Vorzugsweise ist in der zweiten Schwenkstellung der Träger rechtwinklig oder im Wesentlichen rechtwinklig zur Befestigungsanordnung angeordnet.

Vorzugsweise ist der Träger zumindest teilweise neben das Fahrzeug verschwenkbar und insbesondere in der zweiten Schwenkstellung zumindest teilweise neben das Fahrzeug verschwenkt. Beispielsweise kann der Träger (fast) vollständig neben das Fahrzeug verschwenkt werden oder es steht z.B. 70, 50, 40, 30% oder 20% der Länge des Trägers im verschwenkten Zustand über das Heck vor.

Bevorzugt kann die Verrieglungseinrichtung verriegelt werden, wenn sich der Träger in der ersten Schwenkstellung befindet.

Vorzugsweise weist die Befestigungsanordnung ein Befestigungselement auf, das vorzugsweise als Hohlprofil ausgestaltet ist. Das Befestigungselement ist vorzugsweise dazu ausgestaltet um im Wesentlichen horizontaler Richtung entlang eines Hecks mit einer Hecktür, vorzugsweise entlang einer Stoßstange, des Fahrzeugs lösbar angebracht zu werden.

Vorzugsweise weist das Befestigungselement eine erste Seite bzw. Seitenfläche (d.h. eine vom Fahrzeug abgewandte Seite) und eine gegenüberliegende zweite Seite bzw. Seitenfläche (d.h. eine dem Fahrzeug zugewandte Seite) auf, wobei in der zweiten Schwenkstellung ein erster Teil des Trägers bezüglich des Befestigungselements auf der ersten Seite bzw. Seitenfläche und ein zweiter Teil des Trägers bezüglich des Befestigungselements auf der zweiten Seite bzw. Seitenfläche angeordnet ist. Insbesondere ist in der zweiten Schwenkstellung der erste Teil zumindest teilweise neben dem Fahrzeug angeordnet und der zweite Teil ist hinter dem Heck des Fahrzeugs angeordnet.

Insbesondere ist der Träger in der zweiten Schwenkstellung bzw. in einer maximalen Schwenkstellung senkrecht zum Befestigungselement angeordnet.

Vorzugsweise weist das Hohlprofil eine Öffnung auf, wobei der erste Teil der Verrieglungseinrichtung in der Öffnung angeordnet ist, und zur Verriegelung der Verriegelungseinrichtung der zweite Teil der Verrieglungseinrichtung an der Trägeranordnung (und insbesondere an einem Tragarm der Trägeranordnung) durch die Öffnung in den ersten Teil der Verriegelungseinrichtung einführbar ist. Dabei wirken der erste und zweite Teil der Verriegelungseinrichtung derart zusammen, dass die Kraft zwischen der Befestigungsanordnung und der Trägeranordnung wirkt.

Vorzugsweise weist das Hohlprofil jeweils eine Öffnung für den zumindest einen Schwenkarm und/oder die Lagerung des Schwenkarms auf. Die Öffnungen des Hohlprofils sind vorzugsweise dem Träger gegenüberliegend angeordnet.

Vorzugsweise ist bei Verriegelung der Verrieglungseinrichtung die Trägeranordnung spielfrei in der Befestigungsanordnung verriegelt, z.B. durch Verriegelung des ersten Teils mit dem zweiten Teil der Verrieglungseinrichtung. Dadurch können auf die Schwenkvorrichtung einwirkende Kräfte oder Momente zumindest teilweise über die Verriegelungseinrichtung auf die Befestigungsanordnung übertragen werden, wodurch auf zumindest einen Teil der Schwenkvorrichtung (insbesondere auf das Schwenkmittel des Schwenkarms) einwirkende Kräfte oder Momente reduziert sind.

Durch die spielfreie Verriegelung ist die Trägeranordnung bevorzugt in vertikaler Richtung (nach oben und unten) fixiert. Dadurch hat die Trägeranordnung im verriegelten Zustand immer eine stabile Position, wodurch die Betriebssicherheit beim Transportieren der Ladung verbessert wird. Bei spielfreier Verriegelung kann sich die Trägeranordnung vorzugsweise nicht nach oben oder unten bewegen (abgesehen von Verformungen innerhalb der Trägeranordnung) und/oder zur Seite bewegen. Eine solche Bewegung könnte ansonsten beim Bremsen oder Beschleunigen des Fahrzeugs oder beim Überfahren von Schwellen, Schlaglöchern oder ähnlichem hervorgerufen werden.

Vorzugsweise ist die Verriegelungseinrichtung eine zweistufige Verriegelungseinrichtung, die einen ersten Verriegelungszustand aufweist, in dem das Verschwenken der Trägeranordnung bzw. des Trägers gegenüber der Befestigungsanordnung (vorzugsweise aus der ersten Schwenkstellung heraus) blockiert ist, und einen zweiten Verriegelungszustand aufweist, in dem das Verschwenken der Trägeranordnung bzw. des Trägers gegenüber der Befestigungsanordnung (vorzugsweise aus der ersten Schwenkstellung heraus) blockiert ist und die Kraft zwischen der Befestigungsanordnung und der Trägeranordnung wirkt.

Vorzugsweise wird beim Einführen des zweiten Teils der Verriegelungseinrichtung in den ersten Teil der Verriegelungseinrichtung (zunächst) der erste Verriegelungszustand hergestellt oder die Verriegelungseinrichtung nimmt beim Einführen (zunächst) den ersten Verriegelungszustand ein. Beispielsweise schnappt der zweite Teil der Verriegelungseinrichtung in den ersten Teil der Verriegelungseinrichtung (oder andersrum) beim Herstellen des ersten Verriegelungszustand ein.

Vorzugsweise nimmt die Verriegelungseinrichtung den zweiten Verriegelungszustand durch Betätigung eines manuellen oder angetriebenen Betätigungselements, z.B. eines Aktuators, ein. In diesem Zustand wirkt die Kraft zwischen der Befestigungsanordnung und der Trägeranordnung, die eine Last auf zumindest einen Teil der Schwenkvorrichtung reduziert. Vorzugsweise wirkt diese Kraft im ersten Verriegelungszustand nicht.

Wenn die Verriegelungseinrichtung in einem verriegelten Zustand ist und entriegelt wird, wechselt die Verriegelungseinrichtung vorzugsweise von dem zweiten Verriegelungszustand (in dem die Kraft wirkt) in den ersten Verriegelungszustand (in dem die Kraft nicht wirkt).

Vorzugsweise kann die Verriegelungseinrichtung (die sich insbesondere in dem ersten Verriegelungszustand befindet) über ein Entriegelungselement (vollständig) entriegelt werden, so dass der Träger gegenüber der Befestigungsanordnung wieder verschwenkbar ist.

In dem ersten Verriegelungszustand ist vorzugsweise nur das Verschwenken der Trägeranordnung bzw. des Trägers gegenüber der Befestigungsanordnung und insbesondere das Verschwenken aus der ersten Schwenkstellung heraus verhindert. Dieser Verriegelungszustand kann eine Sicherung bereitstellen, so dass eine zweistufige Verriegelung erzielt wird. Sollte sich die Verriegelung aus dem zweiten Verriegelungszustand (z.B. während der Fahrt) lösen, so ist die Trägervorrichtung dennoch gegen Verschenken gesichert. Das Risiko eines Verlusts der Ladung und eines Unfalls kann dadurch verringert werden. Der erste Verriegelungszustand kann auch von Vorteil sein, wenn das Fahrzeug nicht bewegt wird, aber der Träger trotzdem an der Befestigungsanordnung gegen Verschwenken gesichert sein soll.

Der zweite Verriegelungszustand kann vorzugsweise verwendet werden, wenn das Fahrzeug bewegt bzw. gefahren wird und entsprechend hohe Kräfte auf die Trägeranordnung bzw. den Träger einwirken. Durch den zweiten Verriegelungszustand werden die Kräfte auf zumindest einen Teil der Schwenkvorrichtung, die den Träger schwenkbar mit der Befestigungsanordnung verbindet, reduziert. Somit ergibt sich ein geringerer Verschleiß der Schwenkvorrichtung bzw. der Schwenkmittel der Schwenkvorrichtung und insbesondere der Lagerung und somit eine erhöhte Lebensdauer.

Der erste Verriegelungszustand ist optional. Insbesondere kann die Verriegelungseinrichtung auch als einstufige Verriegelung ausgeführt sein, die nur den zweiten Verriegelungszustand einnehmen kann. In diesem Zustand wird bevorzugt sowohl das Verschwenken des Trägers gegenüber der Befestigungsanordnung blockiert als auch die Kraft erzeugt. Das bloße Blockieren des Verschwenkens des Trägers (d.h. die Sicherung) kann beispielsweise über eine weitere Verriegelungseinrichtung erfolgen.

Vorzugsweise weist die Schwenkvorrichtung zumindest einen Schwenkarm auf mit einem Ende, das an der Befestigungsanordnung angelenkt ist und einem gegenüberliegenden Ende, wobei sich der Träger auf dem Schwenkarm abstützt, und wobei die Kraft, die in der verriegelten Stellung der Verriegelungseinrichtung (vorzugsweise in dem zweiten Verriegelungszustand) zwischen der Befestigungsanordnung und der Trägeranordnung wirkt, das gegenüberliegende Ende des Schwenkarms in vertikaler Richtung entlastet (bzw. anhebt), so dass die Schwenkvorrichtung entlastet wird.

Die vertikale Entlastung kann auf verschiedene Weise erfolgen. Insbesondere kann die vertikale Entlastung durch Heranziehen eines Teils der Trägeranordnung an die Befestigungsanordnung (oder andersrum) oder durch Drücken gegen einen Teil der Trägeranordnung oder der Befestigungsanordnung bewirkt werden.

Beispielsweise kann die Verriegelungseinrichtung ein hakenförmiges Element (siehe unten) und einen Bolzen aufweisen, die derart angeordnet sind, dass bei Verriegelung der Verriegelungseinrichtung das hakenförmige Element mit dem Bolzen zusammenwirkt, so dass eine Kraft zwischen der Befestigungsanordnung und der Trägeranordnung wirkt, die die Trägeranordnung an die Befestigungsanordnung heranzieht. Alternativ oder zusätzlich kann die Verriegelungseinrichtung einen Bolzen aufweisen, der derart gegen die Trägeranordnung oder die Befestigungsanordnung drückt, dass die Schwenkvorrichtung in vertikaler Richtung angehoben wird.

Vorzugsweise weist die Schwenkvorrichtung einen ersten Schwenkarm und einen zweiten Schwenkarm auf, die den Träger schwenkbar mit der Befestigungsanordnung verbinden, wobei beide Schwenkarme insbesondere im montierten Zustand der Trägervorrichtung jeweils um eine vertikale Achse schwenkbar sind. Vorzugsweise sind der erste und zweite Schwenkarm nebeneinander, besonders bevorzugt in einer horizontalen Ebene (insbesondere im montierten Zustand der Trägervorrichtung), angeordnet. Beispielsweise ist einer der Schwenkarme an einem ersten Ende des Befestigungselements schwenkbar angelenkt und der andere Schwenkarm zwischen dem ersten Ende und einem gegenüberliegenden zweiten Ende des Befestigungselements schwenkbar an dem Befestigungselement angelenkt. Vorzugsweise ist in der ersten Schwenkstellung der zweite Schwenkarm senkrecht oder im Wesentlichen senkrecht zum Befestigungselement angeordnet. Vorzugsweise ist in der ersten Schwenkstellung der erste Schwenkarm in einem Winkel zwischen 0 und 90° zum Befestigungselement angeordnet.

Vorzugsweise weist die Trägeranordnung einen Tragarm auf mit einem (ersten) Ende, an dem ein Teil der Verriegelungseinrichtung vorgesehen ist und einem gegenüberliegenden (zweiten) Ende, wobei sich der Träger auf dem Tragarm abstützt, wobei die Kraft, die in der verriegelten Stellung der Verriegelungseinrichtung (vorzugsweise in dem zweiten Verriegelungszustand) zwischen der Befestigungsanordnung und der Trägeranordnung wirkt, das gegenüberliegende Ende des Tragarms in vertikaler Richtung anhebt.

Vorzugsweise ist der (erste) Schwenkarm mit seinem gegenüberliegenden Ende (d.h. mit dem der Befestigungsanordnung gegenüberliegenden Ende) mit dem Tragarm, vorzugsweise dem gegenüberliegenden (zweiten) Ende des Tragarms, verbunden.

Bevorzugt ist die Verriegelungseinrichtung manuell und/oder durch einen Aktuator betätigbar. Durch die Betätigung der Verrieglungseinrichtung nimmt die Verriegelungseinrichtung den verriegelten Zustand, in dem die Kraft wirkt, vorzugsweise den zweiten Verriegelungszustand, ein.

Beispielsweise kann die Verriegelungseinrichtung manuell durch einen Hebel betätigbar sein. Beispielsweise kann der Hebel an dem Befestigungselement angeordnet sein. Alternativ oder zusätzlich kann die Verriegelungseinrichtung durch einen Aktuator (insbesondere pneumatisch, hydraulisch oder elektrisch mittels einen elektrischen Motors) betätigbar sein. Der Aktuator ist vorzugsweise über einen Knopf betätigbar. Somit ist eine einfache Bedienung der Trägervorrichtung durch den Nutzer möglich.

Vorzugsweise weist die Verriegelungseinrichtung ein manuelles Betätigungselement (beispielsweise ein Hebel) auf, das derart ausgestaltet ist, dass durch Betätigung des Bestätigungselements die Verriegelung der Verriegelungseinrichtung (insbesondere der zweite Verriegelungszustand) hergestellt wird, in der die Kraft zwischen der Befestigungsanordnung und der Trägeranordnung wirkt. Besonders bevorzugt ist das Betätigungselement arretierbar, um die Verriegelungseinrichtung im verriegelten Zustand (insbesondere im zweiten Verriegelungszustand) zu fixieren.

Das Betätigungselement kann an der Befestigungsanordnung (insbesondere an dem Befestigungselement) oder an der Trägeranordnung (insbesondere an dem Tragarm der Trägeranordnung) angeordnet sein.

Durch die Arretierung kann verhindert werden, dass die Verriegelungseinrichtung ungewollt von dem verriegelten Zustand in einen anderen Zustand wechselt, in dem nicht mehr die Kraft zwischen der Trägeranordnung und der Befestigungsanordnung wirkt. Beispielsweise könnte die Verriegelungseinrichtung ungewollt von dem verriegelten Zustand (insbesondere dem zweiten Verriegelungszustand) in einen komplett entriegelten Zustand (falls erste Verriegelungszustand nicht vorhanden) in dem der Träger verschwenkbar ist, oder in den ersten Verriegelungszustand wechseln.

Insbesondere könnte sich die Verriegelungseinrichtung durch äußere Krafteinflüsse wie beispielswiese Vibrationen entriegeln und insbesondere von dem zweiten Verriegelungszustand in einen Zustand, insbesondere den ersten Verriegelungszustand wechseln, in dem nicht mehr die Kraft zwischen der Befestigungsanordnung und der Trägeranordnung wirkt. In diesem Fall kann die Last, die auf den Träger bzw. die Trägeranordnung einwirkt, nicht mehr optimal über die Verrieglungseinrichtung zur Befestigungsanordnung geleitet werden und die Last auf die Schwenkvorrichtung wäre demnach nicht mehr reduziert. Dies hätte einen erhöhten Verschleiß der Trägervorrichtung und insbesondere der Schwenkvorrichtung zur Folge.

Vorzugsweise weist die Verriegelungseinrichtung ein Arretierungselement auf, das dazu ausgestaltet ist, um die Verriegelungseinrichtung im verriegelten Zustand (insbesondere im zweiten Verriegelungszustand) zu fixieren. Beispielsweise ist das Arretierungselement als Stift oder Pin ausgeführt, der im verriegelten Zustand der Verriegelungseinrichtung (insbesondere im zweiten Verriegelungszustand) in eine Öffnung oder Aussparung, die insbesondere an dem Befestigungselement angeordnet ist, einrastbar ist.

Vorzugsweise weist die Verriegelungseinrichtung einen Übersetzungsmechanismus auf, der eine Betätigungskraft, die zum Verriegeln der Verriegelungseinrichtung aufzubringen ist (insbesondere zum Einnehmen des zweiten Verriegelungszustands), in eine größere Kraft übersetzt, die zwischen der Befestigungsanordnung und der Trägeranordnung wirkt.

Durch den Übersetzungsmechanismus ist die zum Verriegeln der Verriegelungseinrichtung benötigte Kraft (bzw. zum Herstellen des zweiten Verriegelungszustands) verringert. Wenn die Betätigung der Verriegelungseinrichtung beispielsweise manuell über einen Hebel erfolgt, ist es somit für den Nutzer möglich, mit einem geringen Kraftaufwand die Verriegelungseinrichtung zu verriegeln. Dadurch ergibt sich eine einfache und angenehme Bedienung für den Nutzer.

Vorzugsweise weist die Verriegelungseinrichtung eine Justiervorrichtung auf, die dazu ausgestaltet ist, beim Einführen eines ersten Teils der Verriegelungseinrichtung der Trägeranordnung in einen zweiten Teil der Verriegelungseinrichtung der Befestigungsanordnung die Trägeranordnung zur Befestigungsanordnung auszurichten.

Durch die Ladung auf dem Träger kann sich die Trägeranordnung aufgrund der daraus resultierenden Kräfte nach unten neigen. Wenn die Trägeranordnung nun von einem verschwenkten Zustand in den nicht verschwenkten Zustand (d.h. in den ersten Schwenkzustand) gebracht wird, sorgt die Justiervorrichtung bevorzugt dafür, dass die Trägeranordnung und die Befestigungsanordnung zueinander, insbesondere in vertikaler Richtung, ausgerichtet werden. Dadurch kann gewährleistet werden, dass die Verriegelungseinrichtung optimal funktioniert und insbesondere den ersten und zweiten Verriegelungszustand einnehmen kann.

Die Justiervorrichtung kann ein erstes Element und ein zweites Element aufweisen, wobei beim Einführen des ersten Teils der Verriegelungseinrichtung in den zweiten Teil der Verriegelungseinrichtung das erste Element in dem zweiten Element aufgenommen wird und die Trägeranordnung dadurch zur Befestigungsanordnung ausgerichtet wird.

Beispielsweise kann das erste Element als Rolle und das zweite Element als eine Führung ausgebildet sein. Vorzugsweise ist die Rolle an der Befestigungsanordnung (insbesondere innerhalb der Öffnung des Befestigungselements der Befestigungsanordnung) und die Führung an der Trägeranordnung (vorzugsweise an dem Tragarm) angeordnet. Die Anordnung der Rolle und der Führung kann aber selbstverständlich auch getauscht sein.

Vorzugsweise umfasst die Verriegelungseinrichtung einen Exzenter und/oder einen Hebel, wie beispielsweise einen Kniehebel, der die Kraft erzeugt (insbesondere in dem zweiten Verriegelungszustand).

Bevorzugt weist die Verriegelungseinrichtung eine Exzentereinrichtung auf, die eine rotatorische Bewegung in eine translatorische Bewegung umsetzt (bzw. umwandelt), mit der die Trägeranordnung (und insbesondere der Tragarm) gegen die Befestigungsanordnung gezogen wird, wenn die Verriegelungseinrichtung verriegelt wird.

Die Exzentereinrichtung stellt vorzugsweise eine Implementierung des Übersetzungsmechanismus dar, der eine Betätigungskraft, die zum Verriegeln der Verriegelungseinrichtung aufzubringen ist (insbesondere zum Einnehmen des zweiten Verriegelungszustands), in eine größere Kraft übersetzt, die zwischen der Befestigungsanordnung und der Trägeranordnung wirkt. Somit kann die Exzentereinrichtung mit geringem Kraftaufwand betätigt werden.

Vorzugsweise ist ein bzw. das Betätigungselement an der Exzentereinrichtung angebracht, um diese zu drehen. Bevorzugt ist das Betätigungselement ein manuelles Betätigungselement wie beispielswiese ein Hebel, der bei Betätigung die Exzentereinrichtung dreht; es kann auch ein elektrisch, hydraulisch oder pneumatisch angetriebenes Betätigungselement vorgesehen sein, um die Exzentereinrichtung zu drehen.

Bevorzugt ist die Exzentereinrichtung an der Befestigungsanordnung angeordnet. Alternativ kann die Exzentereinrichtung jedoch auch an der Trägeranordnung angeordnet sein.

Alternativ zur Exzentereinrichtung kann die Verriegelungseinrichtung eine Hebeleinrichtung, insbesondere eine Kniehebeleinrichtung aufweisen, die derart ausgestaltet ist, dass bei Betätigung der Hebeleinrichtung die Trägeranordnung (und insbesondere der Tragarm) gegen die Befestigungsanordnung gezogen wird.

Vorzugsweise weist die Exzentereinrichtung zwei Exzenter (insbesondere Exzenterscheiben) auf, die drehbar um eine Drehachse angeordnet sind und die über eine Welle (bzw. Stab oder Bolzen) miteinander verbunden sind, wobei die Welle exzentrisch zur Drehachse der Exzenter angeordnet ist, so dass bei Drehung der Exzenter die Welle eine translatorische Bewegung (insbesondere senkrecht zur Drehachse) ausführt, mit der die Trägeranordnung gegen die Befestigungsanordnung gezogen wird, wenn die Verriegelung hergestellt wird (z.B. der zweite Verriegelungszustand). Dadurch wirkt die Kraft zwischen der Befestigungsanordnung und der Trägeranordnung, die die Last auf zumindest einen Teil der Schwenkvorrichtung reduziert.

Die Drehachse der Exzenter verläuft vorzugsweise durch den Mittelpunkt der Exzenter. Bevorzugt ist die Welle parallel oder im Wesentlichen parallel zu einer Schwenkachse der Schwenkvorrichtung angeordnet.

Vorzugsweise weist die Verriegelungseinrichtung einen Bolzen (z.B. Zapfen) sowie ein hakenförmiges Element (oder Rastelement, Kralle, einen Haken, insbesondere einen Bügel oder Riegel) auf, die derart angeordnet sind, dass bei Verriegelung der Verriegelungseinrichtung (insbesondere im zweiten Verriegelungszustand) das hakenförmige Element mit dem Bolzen zusammenwirkt, um die Kraft zwischen der Befestigungsanordnung und der Trägeranordnung zumindest teilweise aufzubringen.

Vorzugsweise wird der Bolzen bei Verriegelung der Verriegelungseinrichtung (insbesondere im zweiten Verriegelungszustand) spielfrei in der Verriegelungseinrichtung aufgenommen.

Die Verriegelungseinrichtung kann beispielsweise zwei hakenförmige Elemente aufweisen. Beispielsweise kann das hakenförmige Element an der Befestigungsanordnung und der Bolzen an der Trägeranordnung angeordnet sein, oder das hakenförmige Element kann an der Trägeranordnung und der Bolzen an der Befestigungsanordnung angeordnet sein.

Vorzugsweise wird das hakenförmige Element der Verriegelungseinrichtung durch eine vorgespannte Feder in einer Grundstellung gehalten und beim Einführen des Bolzens in das hakenförmige Element, wird das hakenförmige Element entgegen der Federkraft zur Seite gedrückt, wobei sich nach der Aufnahme des Bolzens in dem hakenförmigen Element das hakenförmige Element durch Entlasten der Feder zurück in seine Grundposition bewegt. Der Bolzen schnappt somit bevorzugt in dem hakenförmigen Element ein. Der erste Verriegelungszustand kann so beispielsweise hergestellt werden. Somit ist der Bolzen in dem hakenförmigen Element gesichert und ein Verschwenken der Trägeranordnung gegenüber der Befestigungsanordnung ist blockiert. Vorzugsweise kann das hakenförmige Element über ein Entriegelungselement entriegelt werden, so dass der Träger gegenüber der Befestigungsanordnung wieder verschwenkbar ist.

Vorzugsweise ist das hakenförmige Element drehbar auf der Welle angeordnet, oder der Bolzen wird durch die Welle bereitgestellt und das hakenförmige Element greift in die Welle ein oder hakt in die Welle ein. Wenn die Welle eine translatorische Bewegung ausführt (z.B. durch Drehen der Exzenter), wird somit die Trägeranordnung gegen die Befestigungsanordnung gezogen.

Die zwei hakenförmigen Elemente können in axialer Richtung der Welle bzw. des Bolzens beabstandet sein. Vorzugsweise sind die beiden hakenförmigen Element in der verriegelten Stellung benachbart zu den beiden Exzentern angeordnet. Die Verriegelungseinrichtung kann eine Hülse mit zwei an deren Enden angeordneten hakenförmigen Elementen aufweisen, die insbesondere drehfest mit der Hülse verbunden sind, wobei die Hülse drehbar auf der Welle angeordnet ist.

Vorzugsweise bewegt sich bei Drehung der Exzenter die Welle auf einer Kreisbahn und führt dabei eine zumindest teilweise translatorische Bewegung aus, wobei bei Verriegelung der Verriegelungseinrichtung die Welle mittels des hakenförmigen Elements die Trägeranordnung an die Befestigungsanordnung heranzieht.

Vorzugsweise sind die Welle und die Hülse mit den hakenförmigen Elementen an der Befestigungsanordnung und der Bolzen an der Trägeranordnung bzw. an dem Tragarm der Trägeranordnung angeordnet, oder umgekehrt. Bei Drehung der Exzenter führt die Welle mit den hakenförmigen Elementen eine translatorische Bewegung aus, so dass der Bolzen die Trägeranordnung zur Befestigungsanordnung zieht. Dabei wird der Bolzen vorzugsweise gegen einen Anschlag an der Befestigungsanordnung gezogen, so dass der Bolzen spielfrei an der Befestigungsanordnung aufgenommen ist. Dadurch ist der Träger in vertikaler und/oder horizontaler Richtung fixiert.

Vorzugsweise greift in dem ersten Verriegelungszustand das hakenförmige Element in den Bolzen (bzw. Zapfen) derart ein, so dass ein Verschwenken der Trägeranordnung gegenüber der Befestigungsanordnung blockiert ist. Vorzugsweise ist das hakenförmige Element derart ausgeführt, dass beim Einführen des Bolzens der Bolzen in dem hakenförmigen Element einschnappt.

Mittels des Entriegelungselements kann die Trägeranordnung vorzugsweise entriegelt werden, so dass der Träger wieder verschwenkbar ist. Insbesondere ist ein Verschwenken der Trägeranordnung gegenüber der Befestigungsanordnung blockiert ohne die Kraft aufzubringen. Die Kraft wirkt zwischen der Befestigungsanordnung und der Trägeranordnung vorzugsweise in dem zweiten Verriegelungszustand der Verrieglungsanordnung.

Vorzugsweise entspricht der erste Verriegelungszustand der Verriegelungseinrichtung einer ersten Rotationsposition der Exzenter der Exzentereinrichtung und der zweite Verriegelungszustand der Verriegelungseinrichtung einer zweiten Rotationsposition der Exzenter der Exzentereinrichtung.

Wenn die Exzentereinrichtung an der Befestigungsanordnung angeordnet ist, ist in der ersten Rotationsposition die Welle vorzugsweise näher an der Trägeranordnung angeordnet als in der zweiten Rotationsposition. Wenn die Exzentereinrichtung an der Trägeranordnung angeordnet ist, ist in der ersten Rotationsposition die Welle bevorzugt näher an der Befestigungsanordnung angeordnet als in der zweiten Rotationsposition.

Vorzugsweise sind die Exzenter an gegenüberliegenden Endbereichen der Welle angeordnet und jeweils in einer Buchse, vorzugsweise Gleitbuchse, in der Befestigungsanordnung oder in der Trägeranordnung gelagert.

Vorzugsweise weist die Trägervorrichtung zumindest eine Strebe auf, die sich quer von der Befestigungsanordnung bzw. dem Befestigungselement in entgegengesetzter Richtung des Trägers erstreckt, wobei die Strebe ein freies Ende aufweist, das mit einem Teil des Fahrzeugs verbindbar ist und/oder die Trägervorrichtung, bevorzugt das Befestigungselement, weist eine Aufnahme für eine Anhängerkupplung des Fahrzeugs auf.

Vorzugsweise ist der Träger über einen oder mehrere Schwenkarme der Schwenkvorrichtung schwenkbar an die Befestigungsanordnung angelenkt ist bzw. schwenkbar mit der Befestigungsanordnung verbunden. Bevorzugt weist der Träger eine Tragplattform auf oder ist als Tragplattform ausgestaltet. Beispielsweise kann die Tragplattform über einen ersten und einen zweiten Schwenkarm schwenkbar an der Befestigungsanordnung angelenkt sein.

Weiterhin wird ein Fahrzeug mit einer Trägervorrichtung nach einer der vorab beschriebenen Konfigurationen bereitgestellt, wobei die Befestigungsanordnung ein Befestigungselement aufweist, das in im Wesentlichen horizontaler Richtung entlang eines Hecks mit einer Hecktür, vorzugsweise entlang einer Stoßstange, des Fahrzeugs lösbar angebracht ist.

Vorzugsweise ist der Träger zumindest teilweise neben das Fahrzeug schwenkbar, und insbesondere in der zweiten Schwenkstellung des Trägers der Trägervorrichtung ist der Träger neben das Fahrzeug verschwenkt.

Weiterhin wird ein Verfahren zum Verriegeln einer Trägervorrichtung zum Befestigen einer Ladung an einem Fahrzeug, vorzugsweise einer Trägervorrichtung nach einer der vorab beschriebenen Konfigurationen, bereitgestellt. Die Trägervorrichtung weist auf: eine Befestigungsanordnung, die ausgestaltet ist, um die Trägervorrichtung an dem Fahrzeug zu befestigen; eine Trägeranordnung mit einem Träger für die Ladung und einer Schwenkvorrichtung, die ausgestaltet ist, um den Träger gegenüber der Befestigungsanordnung zu verschwenken; und eine Verriegelungseinrichtung mit Entlastungsvorrichtung, wobei ein erster Teil der Verriegelungseinrichtung an der Befestigungsanordnung und ein zweiter Teil der Verriegelungseinrichtung an der Trägeranordnung vorgesehen ist. Das Verfahren umfasst: Einführen des zweiten Teils der Verriegelungseinrichtung in den ersten Teil der Verriegelungseinrichtung durch Verschwenken des Trägers gegenüber der Befestigungsanordnung in einen unverschwenkten Zustand (d.h. in eine oder die erste Schwenkstellung in der der Träger im Wesentlichen parallel zum Befestigungsanordnung orientiert ist), und Verriegeln der Verriegelungseinrichtung, wodurch eine Kraft zwischen der Befestigungsanordnung und der Trägeranordnung wirkt, die eine Last auf zumindest einen Teil der Schwenkvorrichtung reduziert.

Vorzugsweise nimmt beim Einführen des zweiten Teils der Verriegelungseinrichtung in den ersten Teil die Verriegelungseinrichtung den ersten Verriegelungszustand ein, bei dem das Verschwenken des Trägers gegenüber der Befestigungsanordnung blockiert ist. Vorzugsweise wird durch Betätigen der Verriegelungseinrichtung der zweite Verriegelungszustand hergestellt, in dem die Kraft zwischen der Befestigungsanordnung und der Trägeranordnung wirkt.

Mit einem solchen Fahrzeug oder Verfahren können Vorteile erzielt werden, die den weiter oben beschriebenen Vorteilen der Trägervorrichtung entsprechen.

Selbstverständlich können die oben genannten und die nachfolgend noch zu erläuternden Merkmale nicht nur in den jeweils angegebenen Kombinationen, sondern auch in anderen Kombinationen oder isoliert verwendet werden. Insbesondere können die Merkmale der verschiedenen Aspekte und Ausführungsformen der Erfindung miteinander kombiniert werden, sofern nichts Gegenteiliges vermerkt ist. Das Fahrzeug und das Verfahren können jeweils sämtliche mit Bezug auf die Trägervorrichtung beschrieben Merkmale aufweisen, und die Trägervorrichtung kann Merkmale umfassen, die in Bezug auf das Fahrzeug oder Verfahren beschrieben sind.

### Kurze Beschreibung der Zeichnungen

Die Erfindung wird nachfolgend unter Bezugnahme auf die beiliegenden Zeichnungen näher erläutert. In den Zeichnungen kennzeichnen gleiche Bezugszeichen gleiche oder ähnliche Elemente.
- Fig. 1: ist eine schematische Zeichnung, die eine Trägervorrichtung gemäß einer Ausführungsform in einer perspektivischen Ansicht zeigt.
- Fig. 2: ist eine schematische Zeichnung, die die Trägervorrichtung aus Fig. 1 in einem verschwenkten Zustand zeigt.
- Fig. 3: ist eine schematische Zeichnung, die eine Verriegelungseinrichtung gemäß einer Ausführungsform in einer Explosionsansicht zeigt.
- Fig. 4: ist eine schematische Zeichnung, die die Verriegelungseinrichtung aus Fig. 3 in einer perspektivischen Ansicht zeigt.
- Fig. 5: ist eine schematische Zeichnung, die eine Verriegelungseinrichtung gemäß einer Ausführungsform in einem verriegelten Zustand in einer Schnittansicht zeigt.
- Fig. 6: ist eine schematische Zeichnung, die eine Verriegelungseinrichtung gemäß einer Ausführungsform in einem entriegelten Zustand zeigt.
- Fig. 7: ist eine schematische Zeichnung, die eine Verriegelungseinrichtung gemäß einer Ausführungsform in einem verriegelten Zustand zeigt.

### Beschreibung beispielhafter Ausführungsformen

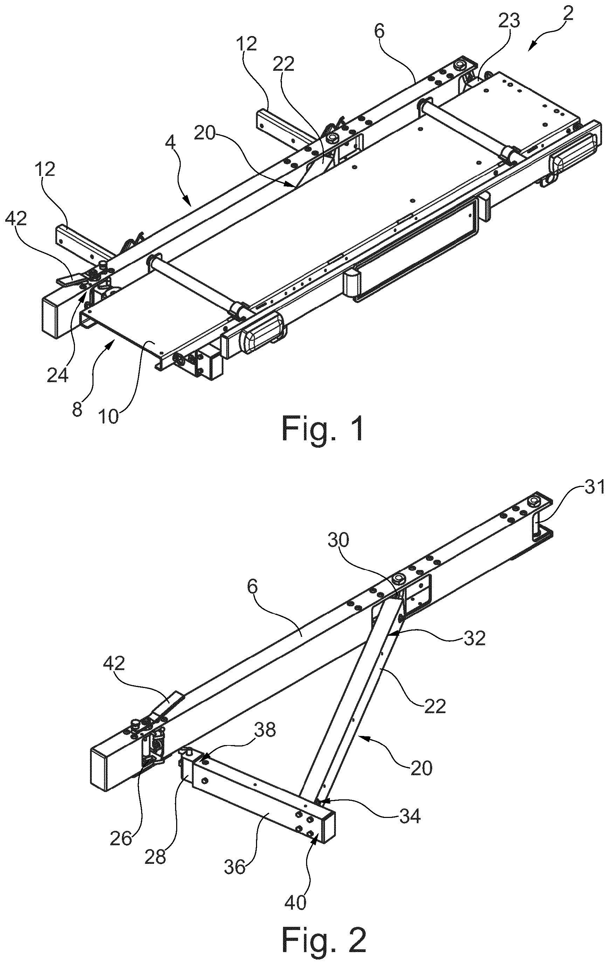

Fig. 1 ist eine schematisch Zeichnung, die eine Trägervorrichtung 2 zum Befestigen einer Ladung an einem Fahrzeug (nicht gezeigt) gemäß einer Ausführungsform in einer perspektivischen Ansicht zeigt. Fig. 2 ist eine schematische Zeichnung, die die Trägervorrichtung 2 aus Fig. 1 in einem verschwenkten Zustand zeigt. Ein Träger 10 und ein zweiter Schwenkarm 23 sind zur Vereinfachung in Fig. 2 nicht dargestellt.

Die Trägervorrichtung 2 weist eine Befestigungsanordnung 4, die ausgestaltet ist, um die Trägervorrichtung 2 an dem Fahrzeug, vorzugsweise lösbar, zu befestigen, und eine Trägeranordnung 8 auf. Die Befestigungsanordnung 4 weist vorzugsweise ein Befestigungselement 6 auf. Das Befestigungselement 6 kann wie in den Figuren 1 und 2 dargestellt beispielsweise als Hohlprofil ausgestaltet sein. Das Befestigungselement 6 ist vorzugsweise dazu ausgestaltet, um in horizontaler oder im Wesentlichen horizontaler Richtung entlang eines Hecks mit einer Hecktür, vorzugsweise entlang einer Stoßstange, des Fahrzeugs lösbar angebracht zu werden.

Vorzugsweise weist die Trägervorrichtung 2 zumindest eine Strebe 12 (oder zwei Streben 12 wie in Fig. 1 gezeigt) auf, die sich quer von dem Befestigungselement 6 in entgegengesetzter Richtung des Trägers 10 erstreckt, wobei die Strebe 12 ein freies Ende aufweist, das mit einem Teil des Fahrzeugs verbindbar ist. Alternativ oder zusätzlich kann die Trägervorrichtung 2, bevorzugt das Befestigungselement 6, eine Aufnahme (nicht gezeigt) für eine Anhängerkupplung des Fahrzeugs aufweisen.

Die Trägeranordnung 8 weist einen Träger 10 (wie in Fig. 1 beispielsweise als Trägerplattform ausgestaltet) für die Ladung und eine Schwenkvorrichtung 20, die ausgestaltet ist, um den Träger 10 gegenüber der Befestigungsanordnung 6 zu verschwenken, auf. Die Trägeranordnung 8 kann beispielsweise zum Transportieren eines Fahrrads und/oder Motorrads verwendet werden. Insbesondere wird die Ladung, beispielsweise das Motorrad, auf den Träger 10 geladen.

Der Träger 10 ist vorzugsweise mittels der Schwenkvorrichtung 20 um eine vertikale oder im Wesentlichen vertikale Achse gegenüber dem Befestigungselement 6 schwenkbar (d.h. der Träger ist in einer horizontalen oder im Wesentlichen horizontalen Ebene dreh- und verschiebbar). Insbesondere ist der Träger gegenüber der Befestigungsanordnung 4 verschwenkbar, so dass in einer ersten Schwenkstellung des Trägers 10 (d.h. in einer nicht verschwenkten Stellung) der Träger 10 im Wesentlichen parallel zum Befestigungselement 6 orientiert ist (siehe Fig. 1) und in einer zweiten Schwenkstellung der Träger winklig zur Befestigungsanordnung orientiert ist (siehe Fig. 2, die ein anfängliches Verschwenken zeigt).

Vorzugsweise ist der Träger 10 in der zweiten Schwenkstellung (insbesondere einer maximalen Schwenkstellung) rechtwinklig oder im Wesentlichen rechtwinklig zum Befestigungselement angeordnet. Wenn die Trägervorrichtung 2 an einem Fahrzeug montiert ist, ist der Träger 10 in der zweiten Schwenkstellung bevorzugt zumindest teilweise neben dem Fahrzeug angeordnet.

Das Befestigungselement 6 weist bevorzugt eine erste Seite (insbesondere eine dem Fahrzeug zugewandte Seite) und eine gegenüberliegende zweite Seite auf, wobei in der zweiten Schwenkstellung ein erster Teil des Trägers 10 bezüglich des Befestigungselements 6 auf der ersten Seite und ein zweiter Teil des Trägers 10 bezüglich des Befestigungselements 6 auf der zweiten Seite angeordnet ist.

Wie in Fig. 1 und 2 dargestellt, kann die Schwenkvorrichtung 20 einen ersten Schwenkarm 22 und einen zweiten Schwenkarm 23 aufweisen, die den Träger 10 schwenkbar mit dem Befestigungselement 6 verbinden, wobei beide Schwenkarme 22, 23 jeweils um eine vertikale Achsen schwenkbar sind. Vorzugsweise weist die Schwenkvorrichtung ein erstes Schwenkmittel 30 (insbesondere eine Lagerung) und ein zweites Schwenkmittel 31 (insbesondere eine Lagerung) auf, wobei das erste Schwenkmittel 30 ein erstes Ende 32 des ersten Schwenkarms 22 und das zweite Schwenkmittel 31 ein erstes Ende des zweiten Schwenkarms 23 schwenkbar mit dem Befestigungselement 6 verbinden. Der Träger 10 stützt sich auf den Schwenkarmen 22, 23 ab, wobei die Kraft, die in der verriegelten Stellung einer Verriegelungseinrichtung 24 zwischen dem Befestigungselement 6 und der Trägeranordnung 8 wirkt, das gegenüberliegende Ende des Schwenkarms 22 und/oder des zweiten Schwenkarms 23 in vertikaler Richtung entlastet bzw. anhebt, so dass die Schwenkvorrichtung 20 entlastet wird. Vorzugsweise weist das Hohlprofil 6 jeweils eine Öffnung für die Schwenkarme 22, 23 und das jeweilige Schwenkmittel 30, 31 auf.

Weiterhin weist die Trägervorrichtung 2 die Verriegelungseinrichtung 24 mit Entlastungsvorrichtung auf, die derart ausgestaltet ist, dass bei Verriegelung der Verriegelungseinrichtung 24 (wie in den Figuren 1, 5 und 7 gezeigt) eine Kraft zwischen der Befestigungsanordnung 6 und der Trägeranordnung 8 wirkt, die eine Last auf zumindest einen Teil der Schwenkvorrichtung 20 reduziert. Wie in Fig. 1 und 2 zu sehen, weist die Verriegelungseinrichtung 24 vorzugsweise einen ersten Teil 26, der in dem Befestigungselement 6 angeordnet ist und einen zweiten Teil 28, der in der Trägeranordnung 8 angeordnet ist, auf.

Wenn der Träger 10 in die erste Schwenkstellung gebracht wird, d.h. in einen nicht verschwenkten Zustand, und die Verriegelungseinrichtung 24 verriegelt wird, wirken der erste und zweite Teil 26, 28 der Verriegelungsvorrichtung 24 bevorzugt derart zusammen, dass die Kraft zwischen der Trägeranordnung 8 und dem Befestigungselement 6 wirkt, die eine Last auf zumindest einen Teil der Schwenkvorrichtung 20 reduziert. Vorzugsweise weist das Hohlprofil 6 eine Öffnung auf, in der der erste Teil 26 der Verrieglungseinrichtung 24 angeordnet ist, und zur Verriegelung der Verriegelungseinrichtung wird der zweite Teil 28 der Verrieglungseinrichtung durch die Öffnung in den ersten Teil 26 der Verriegelungseinrichtung eingeführt.

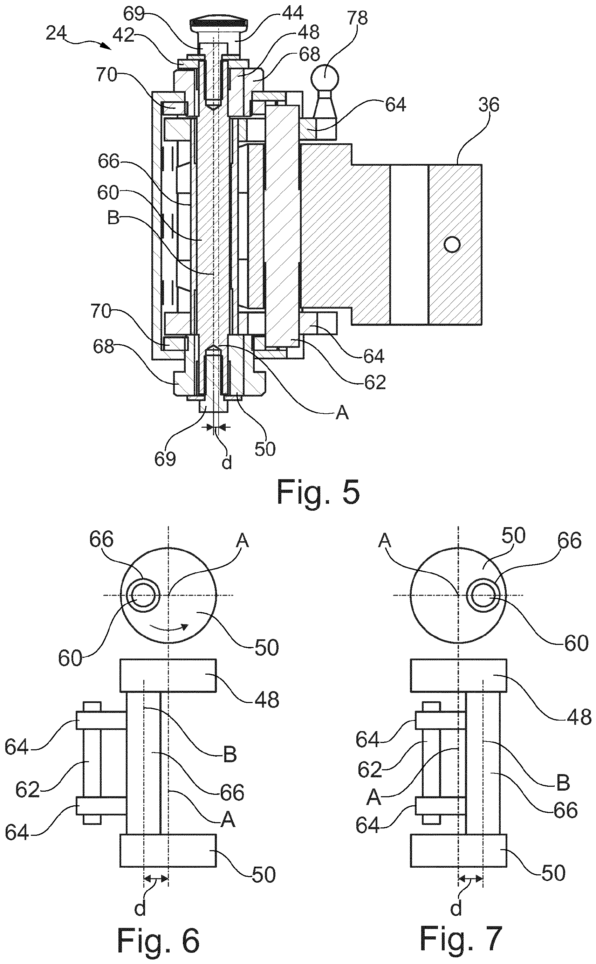

Wie in den Figuren dargestellt kann die Verriegelungseinrichtung 24 als eine zweistufige Verriegelungseinrichtung ausgeführt sein, die einen ersten Verriegelungszustand aufweist, in dem das Verschwenken der Trägeranordnung 8 bzw. des Trägers 10 gegenüber der Befestigungsanordnung 4 bzw. des Befestigungselements (insbesondere aus der ersten Schwenkstellung heraus) blockiert ist (siehe Fig. 6), und einen zweiten Verriegelungszustand aufweist, in dem das Verschwenken der Trägeranordnung 8 bzw. des Trägers 10 gegenüber der Befestigungsanordnung 4 bzw. des Befestigungselements (insbesondere aus der ersten Schwenkstellung heraus) blockiert ist und die Kraft zwischen der Befestigungsanordnung 4 und der Trägeranordnung 8 wirkt (wie in den Figuren 1, 5 und 7 gezeigt). D.h. in dem ersten Verriegelungszustand wirkt die Kraft, die eine Last auf zumindest einen Teil der Schwenkvorrichtung 20 reduziert, nicht. Vorzugsweise kann die Verriegelungseinrichtung 24 vollständig entriegelt werden, so dass die Trägeranordnung 2 gegenüber dem Befestigungselement 6 verschwenkbar ist (wie in Fig. 2 zu sehen).

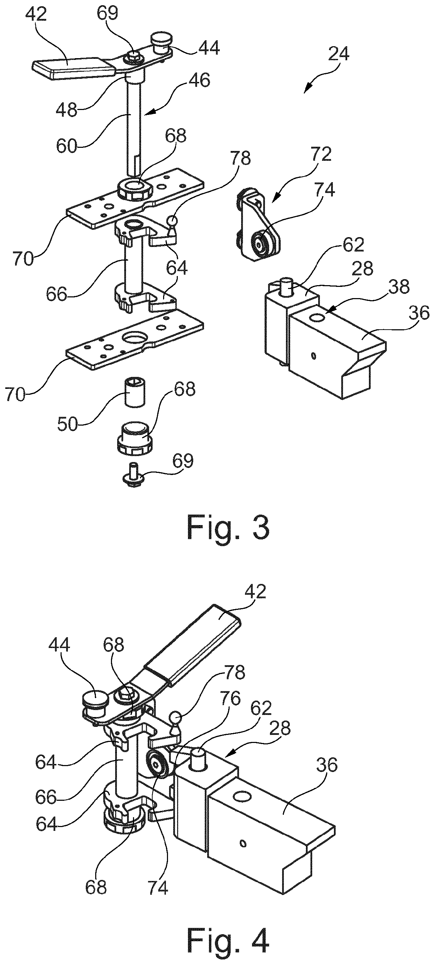

Bevorzugt weist die Verriegelungseinrichtung 24 ein manuelles Betätigungselement 42 (beispielsweise ein Hebel) auf, das derart ausgestaltet ist, dass durch Betätigung des Bestätigungselements 42 die Verriegelung der Verriegelungseinrichtung (insbesondere der zweite Verriegelungszustand) hergestellt wird, in der die Kraft zwischen der Befestigungsanordnung 4 und der Trägeranordnung 8 wirkt. Besonders bevorzugt weist die Verriegelungseinrichtung 24 ein Arretierungselement 44 auf (siehe Figuren 3 und 4), das dazu ausgestaltet ist, um die Verriegelungseinrichtung 24 im verriegelten Zustand (insbesondere im zweiten Verriegelungszustand) zu fixieren. Beispielsweise ist das Arretierungselement 44 als Stift oder Pin ausgeführt, der im verriegelten Zustand der Verriegelungseinrichtung 24 (insbesondere im zweiten Verriegelungszustand) in eine Öffnung oder Aussparung, die insbesondere an dem Befestigungselement 6 angeordnet ist, einrastbar ist und somit den zweiten Verriegelungszustand fixiert. Durch Lösen des Arretierungselements 44 ist es vorzugsweise möglich den Verriegelungszustand der Verriegelungseinrichtung mittels des Hebels 42 zwischen dem ersten und zweiten Verriegelungszustand zu wechseln. Vorzugsweise ist das Arretierungselement 44 an den Hebel 42 gekoppelt und dreht sich beim Drehen des Hebels 42 mit. Vorzugsweise weist das Befestigungselement 6 jeweils eine Öffnung oder Aussparung zum Fixieren des ersten und zweiten Verriegelungszustand auf.

Beispielsweise kann der Hebel 42 und/oder das Arretierungselement 44 an dem Hohlprofil 6, vorzugsweise an einer Oberseite des Hohlprofils 6 angeordnet sein.

Die Trägeranordnung 2 kann einen Tragarm 36 aufweisen mit einem ersten Ende 38, an dem der zweite Teil 28 der Verriegelungseinrichtung 24 vorgesehen bzw. angeordnet ist und einem gegenüberliegenden zweiten Ende 40. Wie in Fig. 2 zu sehen, ist der erste Schwenkarm 22 mit einem gegenüberliegenden Ende 34 mit dem Tragarm 36, vorzugsweise dem gegenüberliegenden Ende 40 des Tragarms 36, verbunden.

Der Träger 10 stützt sich auf dem Tragarm 36 und den Schwenkarmen 22, 23 ab, wobei die Kraft, die in der verriegelten Stellung der Verriegelungseinrichtung (vorzugsweise in dem zweiten Verriegelungszustand) zwischen der Befestigungsanordnung und der Trägeranordnung wirkt, die gegenüberliegenden Enden 34, 40 des ersten Schwenkarms 22 und des Tragarms 36 in vertikaler Richtung anhebt. Dadurch wird die Last auf die Schwenkvorrichtung 20 und insbesondere auf den ersten Schwenkarm 22 reduziert. Dadurch wird das Schwenkmittel 30 des ersten Schwenkarms 22 weniger belastet, wodurch die Schwenkvorrichtung 20 langlebiger ist.

Vorzugsweise ist das Hohlprofil 6 abgesehen von den Öffnungen für die Verriegelungseinrichtung 24 und die Schwenkarme 22, 23 und Schwenkmittel 30, 31 geschlossen ausgestaltet. Somit wird verhindert, dass sich innerhalb des Hohlprofils Schmutz sammelt.

Nachfolgend wird die Verriegelungseinrichtung 24 im Detail beschrieben.

Fig. 3 ist eine schematische Zeichnung, die die Verriegelungseinrichtung 24 gemäß einer Ausführungsform in einer Explosionsansicht zeigt und Fig. 4 ist eine schematische Zeichnung, die die Verriegelungseinrichtung 24 aus Fig. 3 in einer perspektivischen Ansicht zeigt.

Die Verriegelungseinrichtung 24 kann eine Exzentereinrichtung 46 aufweisen, die eine rotatorische Bewegung in eine translatorische Bewegung umsetzt, mit der die Trägeranordnung 2 (und insbesondere der Tragarm 36) gegen die Befestigungsanordnung 4 gezogen wird. Wie in Fig. 3 zu sehen, weist die Exzentereinrichtung 46 bevorzugt einen ersten Exzenter 48 bzw. eine erste Exzenterscheibe und einen zweiten Exzenter 50 bzw. eine zweite Exzenterscheibe auf, die drehbar um eine gemeinsame Drehachse A (siehe Fig. 5) angeordnet sind. Die Drehachse A der Exzenter 48, 50 verläuft durch den Mittelpunkt der Exzenter 48, 50. Die Exzenter 48, 50 sind mit einer Welle 60 verbunden, wobei die Welle 60 exzentrisch zur Drehachse A der Exzenter angeordnet ist, so dass bei Drehung der Exzenter 48, 50 um die Drehachse A die Welle eine translatorische Bewegung (insbesondere senkrecht zur Drehachse A) ausführt, mit der die Trägeranordnung und insbesondere der Tragarm 36 gegen das Befestigungselement 6 gezogen wird. Dadurch wirkt die Kraft zwischen der Befestigungsanordnung 4 und der Trägeranordnung 8, die die Last auf zumindest einen Teil der Schwenkvorrichtung 20 und insbesondere auf den ersten und/oder zweiten Schwenkarm 22, 23 bzw. die Schwenkmittel 30, 31 reduziert.

Insbesondere ist eine Mittelachse B der Welle 60 um einen Versatz d von der Drehachse A der Exzenter 48, 50 versetzt (siehe Figuren 5, 6 und 7). Vorzugsweise ist die Drehachse A der Exzenter 48, 50 und/oder die Welle 60 parallel oder im Wesentlichen parallel angeordnet zur einer Achse angeordnet, um die die Schwenkvorrichtung verschwenkt wird.

Die Welle 60 und die Exzenter 48, 50 können als separate Elemente ausgestaltet sein, wobei die Exzenter 48, 50 bei der Montage drehfest auf die Welle 60 aufgesteckt werden (wie in Fig. 3 zu sehen). Alternativ können die Welle 60 und die Exzenter 48, 50 als einstückiges Teil ausgeführt sein.

Vorzugsweise ist das Betätigungselement 42 (z.B. Hebel) derart ausgeführt, dass bei Betätigung des Betätigungselements 42 die Exzentereinrichtung 46 und insbesondere die Exzenter 48, 50 um ihre Drehachse A gedreht werden. Wie in Fig. 5 zu sehen, kann der Hebel 42 zentrisch zur Mittelachse der Welle 60 angebracht sein und somit exzentrisch zur Drehachse A der Exzenter 48, 50. Insbesondere kann die Welle 60 durch die Exzenter 48, 50 hindurchragen und der Hebel an der Welle 60 befestigt sein (siehe Fig. 5). Alternativ kann der Hebel 42 auch zentrisch zu den Exzentern 48, 50 angebracht sein.

Wie in den Figuren dargestellt bildet die Exzentereinrichtung 46 den ersten Teil 26 der Verriegelungseinrichtung. Insbesondere kann die Exzentereinrichtung 46 an der Befestigungsanordnung 4 bzw. an dem Befestigungselement 6 angeordnet sein.

Die Verriegelungseinrichtung 24 weist bevorzugt einen Bolzen 62 sowie ein hakenförmiges Element 64 auf, die derart angeordnet sind, dass bei Verriegelung der Verriegelungseinrichtung 24 (insbesondere im zweiten Verriegelungszustand) das hakenförmige Element 64 mit dem Bolzen 62 zusammenwirkt, um die Kraft zwischen der Befestigungsanordnung 4 und der Trägeranordnung 8 zumindest teilweise aufzubringen. Vorzugsweise ist das hakenförmige Element 64 drehbar auf der Welle 60 angeordnet, so dass bei Drehung der Exzenter 48, 50 zur Herstellung des zweiten Verriegelungszustand die Welle und somit das hakenförmige Element 64 eine translatorische Bewegung ausführen, mit der der Tragarm 36 bzw. der Bolzen 62 gegen das Befestigungselement 6 gezogen wird (insbesondere der zweite Teil 28 der Verriegelungseinrichtung in den ersten Teil 26 zumindest teilweise hineingezogen wird). Durch Bewegen der Welle 60 in entgegengesetzter Richtung kann der zweite Verriegelungszustand wieder in den ersten Verriegelungszustand überführt werden. Bei drehfester Verbindung zwischen Exzentern und Welle 60 dreht sich die Welle ebenfalls; die Welle muss aber nicht drehfest mit den Exzentern verbunden sein, z.B. wenn der Hebel 42 direkt an einem Exzenter angebracht ist.

Insbesondere kann die Verriegelungseinrichtung 24 eine Hülse 66 mit zwei an deren Enden angeordneten hakenförmigen Elementen 64 aufweisen, die insbesondere drehfest mit der Hülse 60 verbunden sind, wobei die Hülse 60 drehbar auf der Welle angeordnet ist. Dadurch bleibt der Bolzen im ersten Verriegelungszustand blockiert, auch wenn sich die Welle der Exzentereinrichtung 46 dreht.

Der Bolzen 62 bildet vorzugsweise den zweiten Teil 28 der Verriegelungseinrichtung. Beispielsweise kann der Bolzen 62 an der Trägeranordnung 8 und insbesondere an dem Tragarm 36 angeordnet sein. Es kann ein durchgängiger Bolzen 62 vorgesehen sein, in dem die beiden Elemente 64 einhaken, oder es können zwei (nicht durchgehende) Bolzenabschnitte vorgesehen sein.

Vorzugsweise greift in dem ersten Verriegelungszustand der Verriegelungseinrichtung 24 das hakenförmige Element 64 (oder die Hülse 66 mit den hakenförmigen Elementen 64) in den Bolzen 62 derart ein, so dass ein Verschwenken der Trägeranordnung 8 gegenüber der Befestigungsanordnung 4 blockiert ist.

Insbesondere kann das hakenförmige Element 64 derart ausgeführt sein, dass beim Einführen des Bolzens 62 in das hakenförmige Element der Bolzen 62 einschnappt. Beispielsweise kann das hakenförmige Element 64 der Verriegelungseinrichtung 24 durch eine vorgespannte Feder (nicht gezeigt) in einer Grundstellung (wie in Fig. 4 gezeigt) gehalten werden, wobei beim Einführen des Bolzens 62 in das hakenförmige Element 64 das hakenförmige Element 64 entgegen der Federkraft zur Seite gedrückt wird. Nach der Aufnahme des Bolzens 62 in dem hakenförmigen Element 64 bewegt sich das hakenförmige Element 64 vorzugsweise durch Entlasten der Feder zurück in seine Grundposition. Somit ist der Bolzen 62 in dem hakenförmigen Element 64 gesichert und ein Verschwenken der Trägeranordnung 8 gegenüber der Befestigungsanordnung 4 ist blockiert. Vorzugsweise kann das hakenförmige Element 64 über ein Entriegelungselement 78 entriegelt werden (und insbesondere von dem ersten Verriegelungszustand in einen vollständig entriegelten Zustand überführt werden), so dass der Tragarm 36 und somit der Träger 10 gegenüber der Befestigungsanordnung 4 wieder verschwenkbar ist.

Vorzugsweise entspricht der erste Verriegelungszustand der Verriegelungseinrichtung 24 einer ersten Rotationsposition der Exzenter 48, 50 der Exzentereinrichtung (siehe Fig. 6) und der zweite Verriegelungszustand der Verriegelungseinrichtung 24 einer zweiten Rotationsposition der Exzenter 48, 50 der Exzentereinrichtung (siehe Fig. 7).

In den Figuren 6 und 7 sind die Verriegelungszustände und die Rotationspositionen der Exzenter schematisch dargestellt. Zur Veranschaulichung der Funktionsweise sind die Elemente disproportional dargestellt. In den Figuren 6 und 7 ist in der obere Darstellung jeweils eine Draufsicht auf den Exzenter 50 und die Welle 60 mit der Hülse 66 und in der unteren Darstellung eine Seitenansicht gezeigt. In den unteren Darstellungen der Figuren 6 und 7 ist zur Veranschaulichung der in dem hakenförmigen Element 64 aufgenommene Bolzen 62 dargestellt. In der ersten Rotationsposition, die in Fig. 6 dargestellt ist, und dem ersten Verriegelungszustand entspricht, ist die Welle 60 vorzugsweise näher an der Trägeranordnung bzw. dem Tragarm 36 angeordnet als in der zweiten Rotationsposition, die in Fig. 7 dargestellt ist, und dem zweiten Verriegelungszustand entspricht. Beispielsweise entspricht die zweite Rotationsposition der Exzenter einer Drehung um 180° gegenüber der ersten Rotationsposition der Exzenter.

Vorzugsweise bewegt sich bei Drehung der Exzenter um Achse A die Welle auf einer Kreisbahn und führt dabei eine zumindest teilweise translatorische Bewegung aus, wobei bei Verriegelung der Verriegelungseinrichtung die Welle 60 mittels des hakenförmigen Elements 64 den Bolzen 62 und somit den Tragarm 36 an die Befestigungsanordnung 4 heranzieht.

Die Exzenter 48, 50 können an gegenüberliegenden Endbereichen der Welle 60 angeordnet sein und jeweils in einer Buchse 68, vorzugsweise Gleitbuchse, in der Befestigungsanordnung 4 gelagert sein. Vorzugsweise sind die Welle 60 mit den Exzentern 48, 50 und der Hülse 66 mit den hakenförmigen Elementen 64 zwischen zwei Lagerplatten 70 angeordnet. Die Exzenter 48, 50 sind auf der Welle 60 durch Fixierungselemente 69, beispielsweise Schrauben, fixiert.

Die Verriegelungseinrichtung 24 kann eine Justiervorrichtung 72 aufweisen, die dazu ausgestaltet ist, beim Einführen des ersten Teils 26 der Verriegelungseinrichtung in den zweiten Teil 28 der Verriegelungseinrichtung die Trägeranordnung bzw. den Tragarm 36 zur Befestigungsanordnung 4 auszurichten. Durch die Ladung auf dem Träger 10 kann sich die Trägeranordnung aufgrund der daraus resultierenden Kräfte nach unten neigen. Wenn die Trägeranordnung 8 nun von einem verschwenkten Zustand in den nicht verschwenkten Zustand (d.h. in den ersten Schwenkzustand) gebracht wird, sorgt die Justiervorrichtung 72 bevorzugt dafür, dass die Trägeranordnung 8 und die Befestigungsanordnung 4 zueinander, insbesondere in vertikaler Richtung, ausgerichtet werden. Dadurch kann gewährleistet werden, dass die Verriegelungseinrichtung 24 optimal funktioniert und insbesondere den ersten und zweiten Verriegelungszustand einnehmen kann. Beispielsweise kann die Justiervorrichtung ein Rollenelement 74 an dem Befestigungselement aufweisen, insbesondere in der Öffnung in der der erste Teil 26 der Verriegelungseinrichtung angeordnet ist, und ein Führungselement 76 an der Trägeranordnung bzw. dem Tragarm 36. Beim Einführen des zweiten Teils 28 der Verriegelungseinrichtung in den ersten Teil 26 der Verriegelungseinrichtung nimmt das Führungselement 76 die Rolle 74 in sich auf und richtet den Tragarm und das Befestigungselement 6 vertikal zueinander aus. Somit wird der Bolzen 62 des Tragarms 36 vertikal ausgerichtet.

Vorzugsweise wird beim Einführen des zweiten Teils 28 der Verriegelungseinrichtung in den ersten Teil 26 der Verriegelungseinrichtung zunächst der erste Verriegelungszustand hergestellt oder die Verriegelungseinrichtung 24 nimmt beim Einführen zunächst den ersten Verriegelungszustand ein. Vorzugsweise nimmt die Verriegelungseinrichtung 24 den zweiten Verriegelungszustand durch Betätigung des manuellen Betätigungselements 42 ein. In diesem Zustand wirkt die Kraft zwischen der Befestigungsanordnung und der Trägeranordnung, die eine Last auf zumindest einen Teil der Schwenkvorrichtung reduziert. Vorzugsweise wirkt diese Kraft im ersten Verriegelungszustand nicht.

Wenn die Verriegelungseinrichtung 24 den zweiten Verriegelungszustand aufweist und über das Betätigungselement 42 entriegelt wird, wechselt die Verriegelungseinrichtung 24 vorzugsweise von dem zweiten Verriegelungszustand (in dem die Kraft wirkt) in den ersten Verriegelungszustand (in dem die Kraft nicht wirkt). In dem ersten Verriegelungszustand ist ein Verschwenken des Trägers 10 bevorzugt durch das hakenförmige Element 64 blockiert. Das vollständige Entriegeln der Verriegelungseinrichtung 24 und somit ein Verschwenken des Trägers 10 gegenüber dem Befestigungselement 10 kann durch Betätigen des Entriegelungselements 78 erfolgen.

### Bezugszeichenliste

- 2: Trägervorrichtung
- 4: Befestigungsanordnung
- 6: Befestigungselement
- 8: Trägeranordnung
- 10: Träger (z. B. Trägerplattform)
- 12: Strebe
- 20: Schwenkvorrichtung
- 22, 23: erster / zweiter Schwenkarm
- 24: Verriegelungseinrichtung
- 26: erster Teil der Verriegelungseinrichtung
- 28: zweiter Teil der Verriegelungseinrichtung
- 30, 31: erstes / zweites Schwenkmittel
- 32: erstes Ende des ersten Schwenkarms
- 34: zweites Ende des ersten Schwenkarms
- 36: Tragarm
- 38: erstes Ende des Tragarms
- 40: zweites Ende des Tragarms
- 42: Betätigungselement
- 44: Arretierungselement
- 46: Exzentereinrichtung
- 48: erster Exzenter
- 50: zweiter Exzenter
- 60: Welle
- 62: Bolzen
- 64: hakenförmiges Element
- 66: Hülse
- 68: Buchse
- 69: Fixierungselement
- 70: Lagerplatte
- 72: Justiervorrichtung
- 74: Rollenelement
- 76: Führungselement
- 78: Entriegelungselement
- A: Drehachse Exzenter
- B: Mittelachse Welle
- d: Versatz

## Patentansprüche

1. Trägervorrichtung (2) zum Befestigen einer Ladung an einem Fahrzeug, die aufweist:
eine Befestigungsanordnung (4), die ausgestaltet ist, um die Trägervorrichtung (2) an dem Fahrzeug zu befestigen;
eine Trägeranordnung (8) mit einem Träger (10) für die Ladung und einer Schwenkvorrichtung (20), die ausgestaltet ist, um den Träger (10) gegenüber der Befestigungsanordnung (6) zu verschwenken; und
eine Verriegelungseinrichtung (24) mit Entlastungsvorrichtung, die derart ausgestaltet ist, dass durch Verriegelung der Verriegelungseinrichtung (24) eine Kraft zwischen der Befestigungsanordnung (4) und der Trägeranordnung (8) wirkt, die eine Last auf zumindest einen Teil der Schwenkvorrichtung (20) reduziert.

2. Trägervorrichtung nach Anspruch 1, wobei bei Verriegelung der Verrieglungseinrichtung (24) die Trägeranordnung (8) spielfrei in der Befestigungsanordnung (4) verriegelt ist.

3. Trägervorrichtung nach Anspruch 1 oder 2, wobei die Verriegelungseinrichtung (24) eine zweistufige Verriegelungseinrichtung ist, die
einen ersten Verriegelungszustand aufweist, in dem das Verschwenken der Trägeranordnung (8) gegenüber der Befestigungsanordnung (4) blockiert ist, und
einen zweiten Verriegelungszustand aufweist, in dem das Verschwenken der Trägeranordnung (8) gegenüber der Befestigungsanordnung (4) blockiert ist und die Kraft zwischen der Befestigungsanordnung (4) und der Trägeranordnung (8) wirkt.

4. Trägervorrichtung nach einem der vorhergehenden Ansprüche, wobei die Schwenkvorrichtung (20) einen Schwenkarm (22, 23) aufweist mit einem Ende (32), das an der Befestigungsanordnung (4) angelenkt ist und einem gegenüberliegenden Ende (34), wobei sich der Träger (10) auf dem Schwenkarm (22, 23) abstützt, und wobei die Kraft, die in der verriegelten Stellung der Verriegelungseinrichtung (24) zwischen der Befestigungsanordnung (4) und der Trägeranordnung (8) wirkt, das gegenüberliegende Ende (34) des Schwenkarms in vertikaler Richtung entlastet, so dass die Schwenkvorrichtung (20) entlastet wird.

5. Trägervorrichtung nach einem der vorhergehenden Ansprüche, wobei die Trägeranordnung (8) einen Tragarm (36) aufweist mit einem Ende (38), an dem ein Teil (28) der Verriegelungseinrichtung (24) vorgesehen ist und einem gegenüberliegenden Ende (40), wobei sich der Träger (10) auf dem Tragarm (36) abstützt, wobei die Kraft, die in der verriegelten Stellung der Verriegelungseinrichtung (24) zwischen der Befestigungsanordnung (4) und der Trägeranordnung (8) wirkt, das gegenüberliegende Ende (40) des Tragarms (36) in vertikaler Richtung anhebt.

6. Trägervorrichtung nach einem der vorhergehenden Ansprüche, wobei die Schwenkvorrichtung (20) einen ersten Schwenkarm (22) und einen zweiten Schwenkarm (23) aufweist, die den Träger (10) schwenkbar mit der Befestigungsanordnung (4) verbinden.

7. Trägervorrichtung nach einem der vorhergehenden Ansprüche, wobei die Verriegelungseinrichtung (24) einen Übersetzungsmechanismus aufweist, der eine Betätigungskraft, die zum Verriegeln der Verriegelungseinrichtung aufzubringen ist, in eine größere Kraft übersetzt, die zwischen der Befestigungsanordnung (4) und der Trägeranordnung (8) wirkt.

8. Trägervorrichtung nach einem der vorhergehenden Ansprüche, wobei die Verriegelungseinrichtung (24) einen ersten oder den ersten Verriegelungszustand aufweist, in dem ein erster Teil (28) der Verriegelungseinrichtung (24) an der Befestigungsanordnung (4) in einen zweiten Teil (26) der Verriegelungseinrichtung an der Trägeranordnung (8) einschnappt.

9. Trägervorrichtung nach einem der vorhergehenden Ansprüche, wobei die Verriegelungseinrichtung (24) eine Exzentereinrichtung (46) aufweist, die eine rotatorische Bewegung in eine translatorische Bewegung umsetzt, mit der die Trägeranordnung (8) bei Betätigung der Verriegelungseinrichtung (24) gegen die Befestigungsanordnung (4) gezogen wird.

10. Trägervorrichtung nach Anspruch 9, wobei die Exzentereinrichtung (46) zwei Exzenter (48, 50) aufweist, die drehbar um eine Drehachse (A) angeordnet sind und die über eine Welle (60) miteinander verbunden sind, wobei die Welle (60) exzentrisch zur Drehachse der Exzenter (48, 50) angeordnet ist, so dass bei Drehung der Exzenter (48, 50) die Welle (60) eine translatorische Bewegung ausführt, mit der die Trägeranordnung (8) gegen die Befestigungsanordnung (4) gezogen wird.

11. Trägervorrichtung nach einem der vorhergehenden Ansprüche, wobei die Verriegelungseinrichtung (24) einen Bolzen (62) sowie ein hakenförmiges Element (64) aufweist, die derart angeordnet sind, dass bei Verriegelung der Verriegelungseinrichtung (24) das hakenförmige Element (64) mit dem Bolzen (62) zusammenwirkt, um die Kraft zwischen der Befestigungsanordnung (4) und der Trägeranordnung (8) zumindest teilweise aufzubringen.

12. Trägervorrichtung nach den Ansprüchen 10 und 11, wobei das hakenförmige Element (64) drehbar auf der Welle (60) angeordnet ist oder wobei der Bolzen (62) durch die Welle (60) bereitgestellt wird und das hakenförmige Element (64) in die Welle (60) eingreift, so dass bei Drehung der Exzenter (48, 50) die Welle eine translatorische Bewegung ausführt, mit der die Trägeranordnung (8) gegen die Befestigungsanordnung (4) gezogen wird.

13. Trägervorrichtung nach einem der Ansprüche 11 oder 12, wobei die Verriegelungseinrichtung (24) einen ersten oder den ersten Verriegelungszustand aufweist, in dem das hakenförmige Element (64) in den Bolzen (62) eingreift, so dass ein Verschwenken der Trägeranordnung (8) gegenüber der Befestigungsanordnung (4) blockiert ist und die Kraft zwischen der Befestigungsanordnung (4) und der Trägeranordnung (8) nicht wirkt.

14. Fahrzeug mit einer Trägervorrichtung (2) nach einem der vorherigen Ansprüche, wobei die Befestigungsanordnung (4) ein Befestigungselement (6) aufweist, das in im Wesentlichen horizontaler Richtung entlang eines Hecks mit einer Hecktür, vorzugsweise entlang einer Stoßstange, des Fahrzeugs lösbar angebracht ist, wobei der Träger (10) vorzugsweise zumindest teilweise neben das Fahrzeug schwenkbar ist.

15. Verfahren zum Verriegeln einer Trägervorrichtung (2) zum Befestigen einer Ladung an einem Fahrzeug, wobei die Trägervorrichtung aufweist: eine Befestigungsanordnung (4), die ausgestaltet ist, um die Trägervorrichtung (2) an dem Fahrzeug zu befestigen; eine Trägeranordnung (8) mit einem Träger (10) für die Ladung und einer Schwenkvorrichtung (20), die ausgestaltet ist, um den Träger (10) gegenüber der Befestigungsanordnung (4) zu verschwenken; und eine Verriegelungseinrichtung (24) mit Entlastungsvorrichtung, wobei ein erster Teil (26) der Verriegelungseinrichtung an der Befestigungsanordnung (4) und ein zweiter Teil (28) der Verriegelungseinrichtung an der Trägeranordnung (8) vorgesehen ist, wobei das Verfahren umfasst:
Einführen des zweiten Teils (28) der Verriegelungseinrichtung in den ersten Teil (26) der Verriegelungseinrichtung durch Verschwenken des Trägers (10) gegenüber der Befestigungsanordnung (4) in einen unverschwenkten Zustand; und
Verriegeln der Verriegelungseinrichtung (24), wodurch eine Kraft zwischen der Befestigungsanordnung (4) und der Trägeranordnung (8) wirkt, die eine Last auf zumindest einen Teil der Schwenkvorrichtung (20) reduziert.
